# EUROPÄISCHE PATENTSCHRIFT

(11) **EP 0 932 778 B1**
(45) Veröffentlichungstag und Bekanntmachung des Hinweises auf die Patenterteilung: **22.08.2001**
(21) Anmeldenummer: 97945842.9
(22) Anmeldetag: 16.10.1997
(51) Int. Cl.: F16H 61/04

(54) **VERFAHREN ZUR BESTIMMUNG VON KENNGRÖSSEN EINES AUTOMATGETRIEBES**
METHOD OF DETERMINING THE PARAMETERS OF AN AUTOMATIC TRANSMISSION
PROCEDE POUR DETERMINER LES PARAMETRES D'UNE BOITE DE VITESSES AUTOMATIQUE

(30) Priorität: 21.10.1996 DE 19643305
(43) Veröffentlichungstag der Anmeldung: 04.08.1999
(73) Patentinhaber: ZF FRIEDRICHSHAFEN Aktiengesellschaft, 88038 Friedrichshafen (DE)
(72) Erfinder: GIERER, Georg, D-88079 Kressbronn (DE)
(86) Internationale Anmeldenummer: EP9705698
(87) Internationale Veröffentlichungsnummer: WO9817929

(56) Entgegenhaltungen:
- GB-A- 2 299 632
- US-A- 4 928 557
- US-A- 4 982 621
- US-A- 5 072 390
- US-A- 5 335 567

## Beschreibung

Die Erfindung betrifft ein Verfahren zur Bestimmung von Kenngrößen eines elektro-hydraulisch gesteuerten Automatgetriebes, indem auf einem Endprüfstand Schaltungen in die einzelnen Übersetzungsstufen des Automatgetriebes nacheinander initiiert werden und während der Schaltübergänge eine Getriebeeingangs- und Getriebeausgangsdrehzahl sowie ein Getriebeeingangs- und Getriebeausgangsmoment und deren Verläufe über der Zeit gemessen werden.

Bei elektro-hydraulischen Automatgetrieben tritt eine Streuung durch verschiedene Komponenten, Bauteile, innerhalb der Serie auf. Dies kann dazu führen, daß der Schaltkomfort bei zwei identischen Fahrzeugen mit identischen Automatgetrieben sehr unterschiedlich ausfällt. In der Praxis wird nun versucht, diesem Problem dadurch zu begegnen und einen einheitlichen Schaltkomfort zu erzielen, indem adaptive Funktionen in einer elektronischen Getriebesteuerung verwendet werden. So schlägt z. B. die DE-PS 34 36 190 vor, daß eine Ist-Schaltzeit während eines Schaltüberganges mit einer Soll-Schaltzeit verglichen wird. Weicht der Ist- vom Soll-Wert ab, so wird das Druckniveau einer am Schaltübergang beteiligten Kupplung bei der darauffolgenden Schaltung in die gleiche Übersetzungsstufe um einen vorgebbaren Betrag verändert. Wenn nun das Automatgetriebe infolge eines Defektes in einer Kundendienstwerkstatt ausgetauscht werden muß, so stimmen die in der elektronischen Getriebesteuerung gespeicherten adaptiven Daten mit dem tatsächlichen mechanischen Teil des Automatgetriebes nicht mehr überein.

Die Erfindung hat zur Aufgabe, eine schnellere Anbindung einer elektronischen Getriebesteuerung an ein Automatgetriebe bereitzustellen.

Die Aufgabe wird erfindungsgemäß durch ein Verfahren zur Bestimmung von Kenngrößen eines elektro-hydraulisch gesteuerten Automatgetriebes gelöst, indem auf einem Endprüfstand Schaltungen in die einzelnen Übersetzungsstufen des Automatgetriebes nacheinander initiiiert werden. Während der Schaltübergänge wird hierbei eine Getriebeeingangs- und Getriebeausgangsdrehzahl sowie ein Getriebeeingangs- und Getriebeausgangsmoment und deren zeitliche Verläufe gemessen. Aus diesen Meßgrößen werden als Kenngrößen des Automatgetriebes für die während des Schaltübergangs zuschaltende Kupplung eine Füllzeit, ein Fülldruck, eine Reaktionszeit, ein Reibwert der Lamellen und eine Druckfluid-Charge bestimmt. Diese Kenngrößen werden sodann in einem Speicher abgelegt, so daß ein elektronisches Getriebesteuergerät in Abhängigkeit dieser Kenngrößen das Druckniveau und die Zeit eines Schnellfülldruckes, des Fülldrukkes und das Druckniveau eines Schaltdruckes korrigiert.

Die erfindungsgemäße Lösung bietet den Vorteil, daß die gesamte Toleranzkette, das sind Steuerungs- und Getriebetoleranzen, erfaßt werden. Dadurch sind größere Bauteiltoleranzen möglich, was eine kostengünstigere Fertigung ermöglicht. Diese, ein jeweiliges Automatgetriebe kennzeichnenden Größen werden sodann in einem Speicher abgelegt. Gegenüber dem Stand der Technik ergibt sich somit als Vorteil, daß bei einer großen Abweichung vom Ist- zum Soll-Wert das elektronische Getriebesteuergerät schneller den Ist- und Soll-Wert in Übereinstimmung bringt. Das elektronische Getriebesteuergerät gibt aufgrund der Kenngrößen bereits einen erhöhten Druckwert aus.

In einer Ausgestaltung hierzu wird vorgeschlagen, daß die Füllzeit ermittelt wird, indem nach Initiierung der Schaltung die zuschaltende Kupplung mit einem vorgegebenen Druckniveau befüllt wird, bis die Lamellen aneinander anliegen. Die Kupplung selber überträgt noch kein Moment, so daß das Ausgangsmoment Null oder nahezu Null ist.

In einer Ausgestaltung gemäß Anspruch 3 wird vorgeschlagen, daß der Fülldruck ermittelt wird, indem das Druckniveau in der Kupplung so lange erhöht wird, bis daß das von der Kupplung übertragene Moment bzw. das Getriebeausgangsmoment einen Grenzwert überschreitet.

In einer Ausgestaltung gemäß Anspruch 4 wird vorgeschlagen, daß der Reibwert der Lamellen und die Druckfluid-Charge ermittelt werden, indem das Druckniveau in der Kupplung auf einen Soll-Wert erhöht und das Getriebeausgangsmoment hierzu ermittelt wird.

In einer Ausgestaltung gemäß Anspruch 5 wird vorgeschlagen, daß die Reaktionszeit bestimmt wird, indem nach Initiierung der Schaltung die Zeit gemessen wird, bis die Getriebeeingangsdrehzahl den Synchrondrehzahlwert der ursprünglichen Übersetzungsstufe um einen vorgebbaren Wert unterschreitet.

In den Zeichnungen ist ein Ausführungsbeispiel dargestellt.

Es zeigen:
- Fig. 1: ein Systemschaubild und
- Fig. 2: ein Zeitdiagramm einer Hochschaltung.

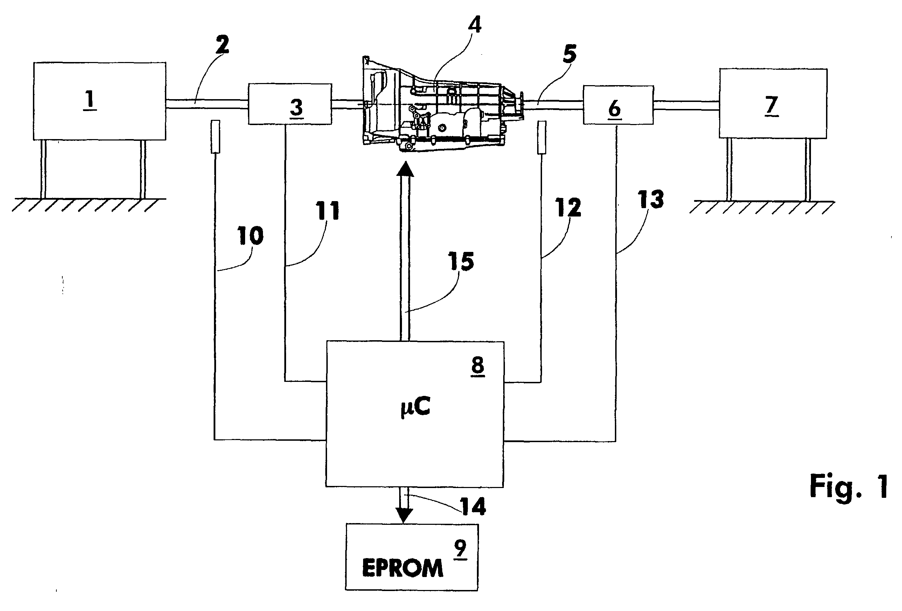

In Fig. 1 ist ein Systemschaubild des Endprüfstandes dargestellt. Dieser besteht im wesentlichen aus einer Antriebseinheit 1, meist einem Elektromotor, einem Automatgetriebe 4, einer Schwungmasse 7 und einem Prüfstandsrechner 8. Die Antriebseinheit 1 treibt über eine Getriebeantriebswelle 2 das Automatgetriebe 4 an. Bestandteil dieser Getriebeantriebswelle 2 ist eine Moment-Meßnabe 3. Über diese Moment-Meßnabe 3 wird das Getriebeeingangsmoment M_ein gemessen. Als zweite Meßgröße der Getriebeantriebswelle 2 wird deren Drehzahl erfaßt. Selbstverständlich ist es auch möglich, statt der Drehzahl der Getriebeantriebswelle 2 die Drehzahl der Turbinenwelle nT des Automatgetriebes 4 zu verwenden. Abtriebsseitig ist das Automatgetriebe 4 mittels einer Getriebeausgangswelle 5 mit einer Schwungmasse 7 verbunden. Bestandteil der Getriebeausgangswelle 5 ist eine Moment-Meßnabe 6, welche das Getriebeausgangsmoment M_aus mißt. Als weitere Meßgröße der Getriebeausgangswelle wird deren Drehzahl nAB erfaßt. Die Meßgrößen Getriebeeingangs- und Getriebeausgangsdrehzahl, Bezugszeichen 10 und 13, werden auf den Prüfstandsrechner 8 geführt. Die Meßgrößen Getriebeeingangs- und Getriebeausgangsmoment, Bezugszeichen 11 und 12, sind hierbei ebenfalls auf dem Prüfstandsrechner 8 geführt.
Der Prüfstandsrechner 8 initiiert via Datenleitung 15 Schaltungen des Automatgetriebes 4. Bekanntermaßen geschieht dies dadurch, daß über elektro-magnetische Stellglieder, die Bestandteil des Automatgetriebes 4 sind, eine erste Kupplung öffnet und eine zweite Kupplung schließt. Der Druckverlauf der beiden an der Schaltung beteiligten Kupplungen wird hierbei vom Prüfstandsrechner 8 mittels des der Kupplung zugeordneten elektro-magnetischen Druckreglers gesteuert. Aus den Meßgrößen Getriebeeingangs-, Getriebeausgangsdrehzahl sowie Getriebeeingangs- und Getriebeausgangsmoment bestimmt der Prüfstandsrechner die für dieses Automatgetriebe kennzeichnenden Größen. Diese Kenngrößen werden in einem EPROM 9 gespeichert. Selbstverständlich ist es auch möglich, die Kenngrößen des Automatgetriebes 4 auf andere Weise verfügbar zu machen, wie z. B. über eine Disk oder einen maschinenlesbaren Code, der über die elektronische Getriebesteuerung ausgelesen werden kann.

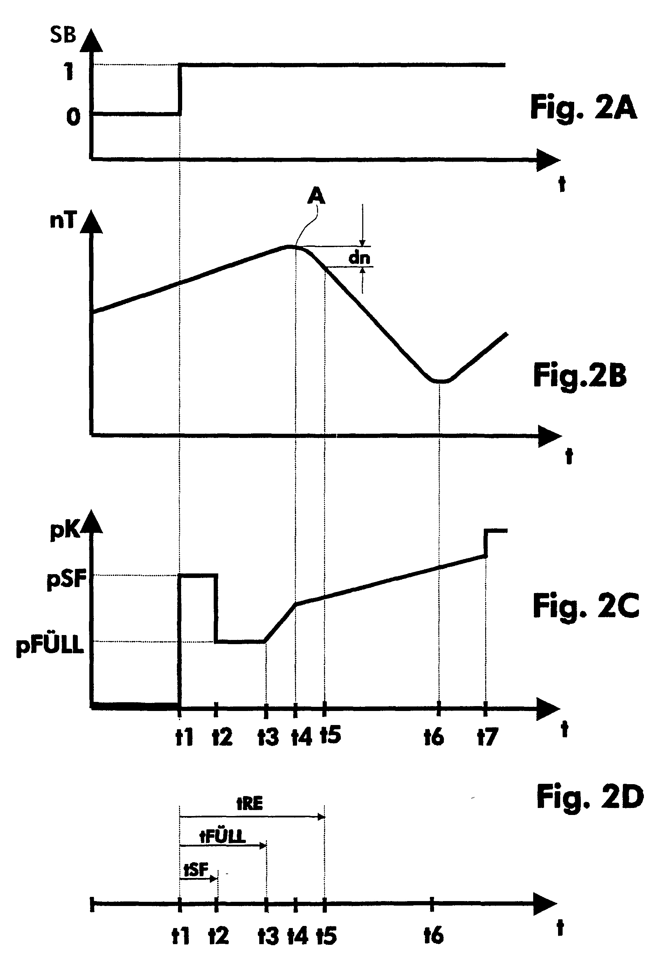

Die Fig. 2 besteht aus den Teil-Fig. 2A bis 2D. Dargestellt ist eine Hochschaltung über der Zeit. Fig. 2A zeigt hierbei den Zeitverlauf des Schaltbefehls, Fig. 2B den Verlauf der Getriebeeingangs- bzw. Turbinendrehzahl nT, Fig. 2C den Druckverlauf pK der zuschaltenden Kupplung und Fig. 2D die Zeitstufen während der Schaltung. Zum Zeitpunkt t1 wird ein Schaltbefehl ausgegeben, d. h. in Fig. 2A ändert sich der Pegel von 0 auf 1. Gleichzeitig wird die zuschaltende Kupplung mit einem hohen Druckniveau, dem Schnellfülldruck pSF, befüllt. Die Schnellfüllung dauert für den Zeitraum tSF. Wie in Fig. 2D dargestellt, endet die Zeitstufe tSF bei t2. Im Zeitraum t2 bis t3 wird die zuschaltende Kupplung mit einem Fülldruck pFüll befüllt. Die Zeitstufe tFüll, siehe Fig. 2D, ist dann beendet, wenn bei der zuschaltenden Kupplung die Lamellen anliegen, diese jedoch noch kein Moment überträgt. Der Prüfstandsrechner 8 erkennt dies dadurch, daß das Ausgangsmoment Null oder nahezu Null ist. Der Fülldruck pFüll wird derart ermittelt, daß dieser erhöht wird, bis das von der zuschaltenden Kupplung übertragene Moment bzw. Getriebeausgangsmoment M_ab einen Grenzwert GW überschreitet, so daß gilt: M_ab > GW. Der Reibwert der Lamellen und die Druckfluid-Charge wird ermittelt, indem das Druckniveau in der zuschaltenden Kupplung auf einen Sollwert erhöht und gleichzeitig das Getriebeausgangsmoment M_ab hierzu ermittelt wird. Dies kann z. B. während des Zeitraums t3 bis t4 durchgeführt werden. Im Zeitpunkt t4 beginnt die zuschaltende Kupplung das Getriebeeingangsmoment M_ein von der abschaltenden Kupplung zu übernehmen. Dies ist eindeutig erkennbar, indem im Punkt A, siehe Fig. 2B, die Getriebeeingangs- bzw. Turbinendrehzahl nT sich ändert. Im Zeitpunkt t5 hat die Getriebeeingangsdrehzahl den Synchrondrehzahlwert, Punkt A, um einen vorgebbaren Wert dn unterschritten. Hieraus ergibt sich gemäß der Fig. 2D eine Reaktionszeit tRE vom Zeitpunkt t1 bis t5.

Wie unter Fig. 1 beschrieben, werden die Kenngrößen des Automatgetriebes 4, nämlich Füllzeit tFüll, der Reibwert der Lamellen und die Druckfluid-Charge sowie die Reaktionszeit tRE in einem elektronischen Speicher EPROM 9 gespeichert. Die Ermittlung der Kennwerte muß für jede Kupplung nur einmal ermittelt werden und kann dann auf andere Schaltungen übernommen werden.
Anhand dieser Kenngrößen kann dann ein elektronisches Getriebesteuergerät das Automatgetriebe identifizieren. Mit anderen Worten: Nachdem das Automatgetriebe in einem Kraftfahrzeug eingebaut wurde, liest das elektronische Getriebesteuergerät die Kenngrößen aus. In Abhängigkeit dieser verändert das elektronische Getriebesteuergerät das Druckniveau eines Schnellfülldruckes, den Fülldruck und den Schaltdruck.

### Bezugszeichen

- 1: Antriebseinheit
- 2: Getriebeantriebswelle
- 3: Moment-Meßnabe
- 4: Automatgetriebe
- 5: Getriebeausgangswelle
- 6: Moment-Meßnabe
- 7: Schwungmasse
- 8: Prüfstandsrechner
- 9: Speicher
- 10: Getriebeeingangsdrehzahl
- 11: Getriebeeingangsmoment M_ein
- 12: Getriebeausgangsdrehzahl nAB
- 13: Getriebeausgangsmoment M_aus
- 14: Datenleitung
- 15: Datenleitung

## Patentansprüche

1. Verfahren zur Bestimmung von Kenngrößen eines elektro-hydraulisch gesteuerten Automatgetriebes (4), indem auf einem Endprüfstand Schaltungen in die einzelnen Übersetzungsstufen des Automatgetriebes nacheinander initiiert werden, während der Schaltübergänge eine Getriebeeingangs-(nT) und Getriebeausgangsdrehzahl (nAB), ein Getriebeeingangs- (M_ein) und Getriebeausgangsmoment (M_aus) sowie deren Verläufe über der Zeit gemessen werden, aus diesen Meßgrößen als Kenngrößen des Automatgetriebes für die während des Schaltübergangs zuschaltende Kupplung eine Füllzeit (tFüll), ein Fülldruck (pFüll), eine Reaktionszeit (tRE), ein Reibwert der Lamellen und eine Druckfluid-Charge bestimmt werden und die Kenngrößen in einem Speicher (9) abgelegt werden, so daß ein elektronisches Getriebesteuergerät in Abhängigkeit dieser Kenngrößen das Druckniveau und die Zeit eines Schnellfülldruckes (pSF), des Fülldrukkes (pFüll) und das Druckniveau eines Schaltdruckes (pSch) korrigiert, wobei der Schaltdruck maßgeblich das Druckniveau bei Hoch-, Rück- und Überschneidungsschaltungen und Gangeinlegen bestimmt.

2. Verfahren nach Anspruch 1, dadurch **gekennzeichnet,** daß die Füllzeit (tFüll) ermittelt wird, indem nach Initiierung der Schaltung die zuschaltende Kupplung mit einem vorgegebenen Druckniveau befüllt wird, bis die Lamellen aneinander anliegen, wobei die Kupplung noch kein Moment überträgt bzw. das Ausgangsmoment Null oder nahezu Null ist (M_ab = 0).

3. Verfahren nach Anspruch 1, dadurch **gekennzeichnet**, daß der Fülldruck (pFüll) ermittelt wird, indem das Druckniveau in der Kupplung (pK) so lange erhöht wird, bis daß das von der Kupplung übertragene Moment bzw. das Getriebeausgangsmoment (M_ab) einen Grenzwert (GW) überschreitet (M_ab > GW).

4. Verfahren nach Anspruch 1, dadurch **gekennzeichnet**, daß der Reibwert der Lamellen und die Druckfluid-Charge ermittelt werden, indem das Druckniveau in der Kupplung (pK) auf einen Sollwert (pSoll) erhöht und das Getriebeausgangsmoment (M_ab) hierzu ermittelt wird (M_ab = f(pSo11)).

5. Verfahren nach einem der Ansprüche 1 bis 4, dadurch **gekennzeichnet**, daß die Reaktionszeit (tRE) bestimmt wird, indem nach Initiierung der Schaltung die Zeit gemesssen wird, bis die Getriebeeingangsdrehzahl (nT) den Synchrondrehzahlwert der ursprünglichen Übersetzungsstufe (nSyn um einen vorgebbaren Wert (dn) unterschreitet (nT = nSyn-dn).

6. Verfahren nach Anspruch 1, dadurch **gekennzeichnet**, da die Kenngrößen zusätzlich bei einer minimalen (Θ MIN) und maximalen Temperatur (Θ MAX) bestimmt werden, hieraus eine Temperatur-Kennlinie bestimmt wird, so daß das elektronische Getriebesteuergerät in Abhängigkeit dieser Kenngrößen und der Kennlinie das Druckniveau und die Zeit des Schnellfülldruckes (psF), des Fülldruckes (pFüll) und das Druckniveau des Schaltdrukkes (pSch) korrigiert, wobei der Schaltdruck maßgeblich das Druckniveau bei Hoch-, Rück- und Überschneidungsschaltungen und Gangeinlegen bestimmt.

## Claims

1. A method of determining parameters of an electrohydraulically controlled automatic transmission (4), wherein gearshifts into the individual gearing steps of the automatic transmission are initiated in succession on a final test rig, during the shift transitions a transmission input speed (nT), a transmission output speed (nOUT), a transmission input torque (M_in) and a transmission output torque (M_out) as well as the progressions thereof over time are measured, from these measured variables as parameters of the automatic transmission for the engaging clutch during the shift transition a filling-time (tFüll), a filling-pressure (pFüll), a response-time (tRE), a frictional value pertaining to the plates and a pressure-fluid charge are determined, and the parameters are saved in a memory (9) so that an electronic transmission control unit corrects, as a function of these parameters, the pressure level and the time of a fast-filling pressure (pSF), of the filling-pressure (pFüll) and the pressure-level of a shift pressure (pSch), whereby the shift pressure decisively determines the pressure-level in the course of up-shifts, down-shifts and cross-over shifts and gear engagements.

2. Method according to Claim 1, characterised in that the filling-time (tFüll) is ascertained by the engaging clutch being filled at a specified pressure-level after initiation of the gearshift until the plates abut one another, whereby the clutch does not yet transmit any torque or the output torque is zero or virtually zero (M_out = 0).

3. Method according to Claim 1, characterised in that the filling-pressure (pFüll) is ascertained by the pressure-level in the clutch (pK) being increased until such time as the torque transmitted by the clutch or the transmission output torque (M_out) exceeds a limiting value (GW) (M_out > GW).

4. Method according to Claim 1, characterised in that the frictional value pertaining to the plates and the pressure-fluid charge are ascertained by the pressure-level in the clutch (pK) being increased to a desired value (pDes) and by the transmission output torque (M_out) for this purpose being ascertained (M_out = f(pDes)).

5. Method according to one of Claims 1 to 4, characterised in that the response-time (tRE) is determined by the time being measured after initiation of the gearshift until the transmission input speed (nT) falls below the synchronous-speed value of the original gearing step (nSyn) by a specifiable value (dn) (nT = nSyn-dn).

6. Method according to Claim 1, characterised in that the parameters are additionally determined at a minimum temperature (θ MIN) and at a maximum temperature (θ MAX), and from these values a temperature characteristic is determined so that the electronic transmission control unit corrects, as a function of these parameters and of the characteristic, the pressure-level and the time of the fast-filling pressure (pSF), of the filling-pressure (pFüll) and the pressure-level of the shift pressure (pSch), whereby the shift pressure decisively determines the pressure-level in the course of up-shifts, down-shifts and cross-over shifts and gear engagements.

## Revendications

1. Procédé pour déterminer des paramètres d'une boîte de vitesses automatique (4) à commande électrohydraulique, dans lequel, sur un banc d'essai, on déclenche l'un après l'autre des changements donnant les différents rapports de transmission de la boîte de vitesses automatique et, pendant les changements de rapports, on mesure une vitesse de rotation d'entrée (nT) de la boîte de vitesses, une vitesse de rotation de sortie (nAB) de la boîte de vitesses, un couple d'entrée (M_ein) et un couple de sortie (M_aus) de la boîte de vitesses, ainsi que leurs variations dans le temps et, sur la base de ces grandeurs mesurées, on détermine, en qualité de paramètres de la boîte de vitesses automatique, un temps de remplissage (tFüll), une pression de remplissage (pFüll), un temps de réaction (tRE), un coefficient de frottement des disques et une charge de fluide sous pression pour l'embrayage qui doit être embrayé pendant le changement de rapport, et les paramètres sont enregistrés clans une mémoire (9), de sorte qu'un appareil de commande électronique de la boîte de vitesses corrige, en fonction de ces paramètres, le niveau et le temps d'une pression de remplissage rapide (pSF), de la pression de remplissage (pFüll) et le niveau d'une pression de changement (pSch), la pression de changement fixant dans une mesure déterminante le niveau de pression lors des changements en montée, en rétrogradation et en chevauchement, et lors des enclenchements de rapports.

2. Procédé selon la revendication 1, **caractérisé** en ce que le temps de remplissage (tFüll) est obtenu par le fait qu'après le déclenchement du changement, on remplit l'embrayage qui doit être embrayé avec un niveau de pression prédéterminé, jusqu'à ce que les disques soient en appui les uns contre les autres, l'embrayage ne transmettant encore aucun couple, ou le couple de sortie étant nul ou presque nul (M_ab = 0).

3. Procédé selon la revendication 1, **caractérisé** en ce que la pression de remplissage (pFüll) est obtenue par le fait qu'on élève le niveau de pression dans l'embrayage (pK) jusqu'à ce que le couple transmis par l'embrayage ou le couple de sortie de la boîte de vitesses (M_ab) devienne supérieur à une valeur limite (GW) (M_ab > GW).

4. Procédé selon la revendication 1, **caractérisé** en ce que le coefficient de frottement des disques et la charge de fluide sous pression sont obtenus par le fait qu'on élève le niveau de pression dans l'embrayage (pK) jusqu'à une valeur de consigne (pSoll) et qu'on mesure le couple de sortie (M_ab) de la boîte de vitesses à ce moment (M_ab = f(pSoll)).

5. Procédé selon l'une des revendications 1 à 4, **caractérisé** en ce que le temps de réaction (tRE) est déterminé par le fait qu'on mesure le temps s'écoulant après le déclenchement du changement jusqu'au moment où la vitesse de rotation d'entrée de la boîte de vitesses (nT) devient inférieure à la valeur de vitesse de rotation synchrone du rapport de transmission initial (nSyn) d'une valeur (dn) pouvant être prédéterminée (nT = nSyn-dn).

6. Procédé selon la revendication 1, **caractérisé** en ce que les paramètres sont en outre déterminés à une température minimale (Θ MIN) et à une température maximale (Θ MAX), et qu'une caractéristique de température est déterminée à partir de ces paramètres, de sorte que l'appareil de commande électronique de la bo te de vitesses corrige, en fonction de ces paramètres et de la caractéristique, le niveau et le temps de la pression de remplissage rapide (psF), de la pression de remplissage (pFüll) et le niveau de la pression de changement (pSch), la pression de changement fixant dans une mesure déterminante le niveau de pression lors des changements en montée, en rétrogradation et en chevauchement, et lors des enclenchements de rapports.
